# EUROPEAN PATENT APPLICATION

(11) **EP 2 266 391 A2**
(43) Date of publication of application: **29.12.2010**
(21) Application number: 10167404.2
(22) Date of filing: 25.06.2010
(51) Int. Cl.: A01J 27/02, A23C 19/16, B65D 85/76

(54) **Piece of cheese cut from a block, such as a wheel, brick, or ball, and method of and apparatus for preparing the same**

(30) Priority: 26.06.2009 NL 2003091
(71) Applicant: West Land Kaas Groep B.V., 1271 EP Huizen (NL)
(72) Inventor: Lustig, Cornelis, 1272 HT, Huizen (NL); Homan, Hittjo Remmelt, 3812 RS, Amersfoort (NL)
(74) Representative: De Vries & Metman

(57) **Abstract**

The invention relates to a piece of cheese (1) cut from a block, such as a wheel, brick, or ball, and having a rind (6) and at least one exposed portion (4) for cutting e.g. slices from. Pre-cuts (7) extend into the cheese and along the rind (6) to facilitate removing by hand sections (10) of the rind (6) adjoining the exposed portion (4).

## Description

The invention relates to a piece of cheese cut from a block, such as a wheel, brick, or ball, and having a rind and at least one exposed portion for cutting e.g. slices from. The invention further relates to a method of and apparatus for preparing a piece of cheese.

Cheese is often sold by cheesemongers and supermarkets in the form of pieces cut from a block, such as a wheel, brick, or ball. The rind is left on two opposite sides and often also on the back, the back being formed by an edge of the block from which the piece was cut. Before taking slices from an exposed portion of the piece by means of a blade or cheese slicer, consumers typically remove the rind on either side of the exposed portion by means of a knife.

It is an object of the present invention to provide a piece of cheese which is safer and easier to handle by consumers.

To this end, the piece of cheese according to the present invention is characterized by pre-cuts extending into the cheese and along the rind to facilitate removing by hand sections of the rind adjoining the exposed portion.

Thus, no knife, cheese slicer or other implement is required to cut the rind loose from the cheese, while preserving the advantages of the rind, such as allowing the consumer to hold the piece of cheese without touching the cheese itself, preventing the cheese from drying out too quickly, and providing information and/or decoration, such as branding, printed on or branded or embedded in or beneath the rind, and/or texture or a pattern.

To be able to keep to a minimum the amount of cheese lost together with the rind to be removed by hand, it is preferred that the pre-cuts or, in case of e.g. undulating or zigzag pre-cuts, the centre lines of the pre-cuts extend parallel to the rind.

Although it is possible to adhere the rind to the cheese by means of e.g. an edible adhesive or vacuum, it is preferred to use pre-cuts of limited depth, i.e. pre-cuts that do not extend over the entire height of the piece of cheese, leaving bridges connecting the rind to the cheese.

Further, to enable peeling from both sides of the piece of cheese, it is preferred that the pre-cuts extend from opposite sides of the piece.

The invention further relates to a piece of cheese cut from a block, such as a wheel, brick, or ball, and having a rind and at least one exposed portion for cutting e.g. slices from as well as to a block of cheese, wherein the rind is provided with pre-cuts dividing the rind in sections. Thus, in case of a piece of cheese, no knife or other implement is required to cut the rind. In case of a block of cheese, the pre-cuts facilitate removing sections of the rind by hand once the block is cut into pieces by e.g. a cheesemonger or at a supermarket.

It is preferred that the piece of cheese comprises both types of pre-cut, i.e. both pre-cuts extending into the cheese and along the rind and pre-cuts extending through the rind. In that case, sections of the rind on opposite sides of the piece of cheese can be removed by hand without the use of any implement.

The invention also relates to a method of preparing a piece of cheese, comprising the steps of cutting a block of cheese into pieces having a rind and at least one exposed portion for cutting e.g. slices from, and making pre-cuts in the cheese along the rind and/or making pre-cuts in the rind to facilitate removing by hand sections of the rind adjoining the exposed portion.

To be able to efficiently integrate the method according to the present invention into current methods and apparatuses for preparing pieces of cheese from blocks, in particular rectangular blocks, it is preferred that the pre-cuts in the rind are made during cutting the block of cheese into pieces, e.g. by means of an apparatus comprising one or more cutting elements having a length at least equal to the height of the block for cutting the block into two or more subblocks and a plurality of shorter cutting elements for making the pre-cuts in the rind.

NL 1021641 relates to a method wherein at least one triangular piece (4) of cheese is successively cut into thin slices starting from its narrow end (5) and moving towards its curved wide end (6) whilst the piece still has its underside attached to the rind. The cheese (1) is cut in half along a plane (2) extending essentially parallel to its top and bottom sides and then cut into triangular pieces.

EP 93 217 relates to a method of obtaining arc-shaped blocks of cheese from a round whole-cheese, whereby the latter is cut beforehand along one or two of its diameters into half-cheeses (M) or quarter-cheeses (M1), **characterised in that** ring portions are cut from each of these parts and that finally these ring portions are divided into segments by means of radial cuts.

EP 278 550 relates to a method of slicing round cheeses, wherein a cylindrical portion is cut from the centre of the cheese and the resulting annular piece of cheese is divided into wedge-shaped portions by making radially extending cuts through the central axis of the cheese. Before or after the cutting away of the cylindrical central portion, the cheese is divided into at least two pieces, each being pressed with the face of the cylindrical hole against a semi-cylindrical guide and being rotated stepwise around said guide through a fixed, adjustable angle, while after each angular displacement, a wedge-shaped slice having a maximum thickness of 5 mm is cut off.

EP 168 117 relates to a device for removing rind from cheese by means of independently driven cylindrical cutting element (31, 32) preferably of the type of a metal milling cutter (23), which elements are placed in overlapping positions along top face and sides of a cheese, each element being mounted in a single swivel arm (15) which swings about shafts (16) extending transversely to the direction of movement and parallel to the cheese faces to be treated, which arms (15) are free to rotate about a shaft (17) which coincides with the longitudinal axis of the arm (15) and extends at a right angle to the swivelling shaft (17).

Within the framework of the present invention, the word "block" includes any cheese that comprises a rind and is to be cut to smaller pieces comprising a rind. It includes, but is not limited to, round cheeses, such as wheels and balls, oval cheeses, carons, and cheeses shaped as a parallelepiped, such as bricks.

The word "pre-cuts" refers to incisions applied prior to the piece of cheese being handled by the consumer, i.e. in practice typically prior to retail or wholesale and/or prior to the piece of cheese being packaged. Accordingly, the present invention also relates to a package, typically a sealed package, containing a piece of cheese comprising pre-cuts as described above. The word "cheese" refers to cheese and cheese-like products, such as cheeses wherein part of the milk fat has been replaced by vegetable oil.

Further, in practice, a cheese is never a perfect cylinder or parallelepiped. The top, bottom and side surfaces bulge and the degree of bulging varies between types of cheese and even between cheeses made in the same batch and under the same conditions. Words as "parallel" and "along" should be construed in this context, e.g. in many instances the distance between the pre-cuts and the rind or back and exposed portion will vary to some extend.

The invention will now be explained in more detail with reference to the drawings, which show a preferred embodiment of the present invention.
Figure 1 is a perspective view of a piece of cheese according to the present invention.
Figure 2 is an enlargement of a part of Figure 1.
Figure 3 is a perspective view of the piece of cheese shown in Figure 1, with two sections of the rind removed.
Figure 4 is a perspective view of a first apparatus according to the present invention for cutting a block of cheese into two pieces and making pre-cuts in the rind.
Figure 5 is a perspective view of a second apparatus according to the present invention for making pre-cuts in the cheese, parallel to the rind.

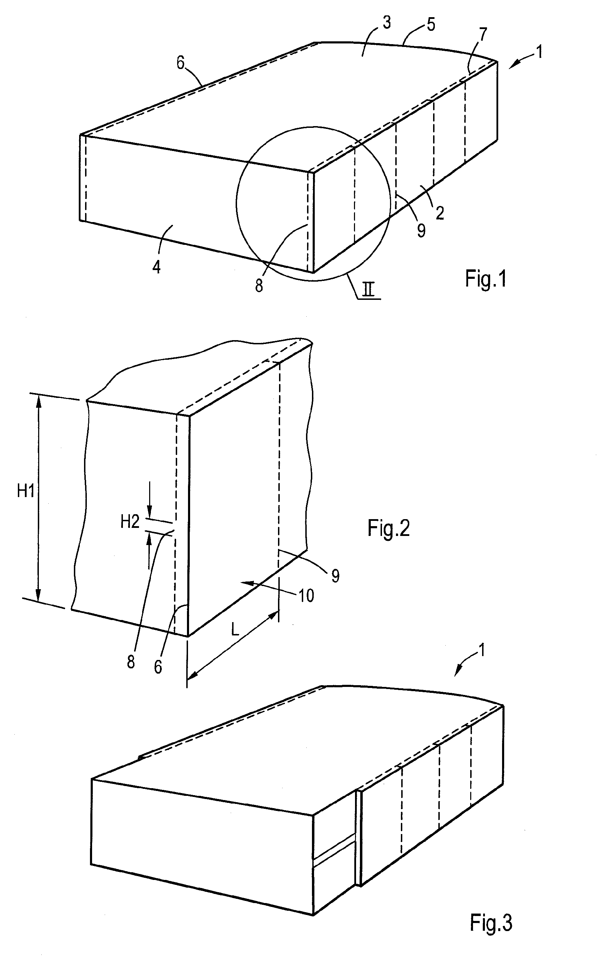

Figure 1 shows a flat piece of cheese 1 cut from a block, in this example from a substantially rectangular brick. The piece 1 comprises two narrow sides 2, two exposed broad sides 3, an exposed front 4 and a back 5 formed by the edge of the rectangular brick from which the piece 1 was cut. A rind 6, in this example a thin layer of a cheese coating, e.g. polyvinyl acetate copolymer, and optionally one ore more labels or printing and an outer layer of cheesewax, all known, extends over both narrow sides 2 and the back 5.

A group of first pre-cuts 7 extends into the cheese and parallel to the rind 6 on both narrow sides 2 of the piece 1, e.g. at 3 millimeters from the rind 6. In this example, the pre-cuts 7 extend from both broad sides 3 of the piece 1 and to a depth less than half the height H1 of the piece of cheese leaving bridges 8 having a height H2 connecting the rind 6 to the cheese. In this embodiment, the bridges 8 have a height H2 of 5 millimeters. To provide a sufficiently strong connection on the one hand and easy peeling on the other hand, it is generally preferred that the height of the bridges is in a range from 5% to 30% of the height of the piece of cheese.

A group of second pre-cuts 9 extends through the rind 6 and parallel to the exposed front 4 and the back 5 and into the cheese up to or slightly beyond the first pre-cuts 7 thus dividing the rind 6 in sections. In general, it is preferred that the sections have a length L in a range from 1 to 5 centimeters, preferably 1,5 to 3,5 centimeters to prevent too much rind from being removed at a time. The pre-cuts through the rind need not be straight, but could be e.g. undulating or zigzagged.

By virtue of the pre-cuts, a consumer before taking slices from the exposed front of the piece of cheese, can peel off by hand one or more sections of the rind on either side of the exposed front in accordance with the amount of cheese to be consumed. A knife is not required, increasing safety and ease of use. In the embodiment shown in Figure 3, one section has been removed on either side of the exposed portion.

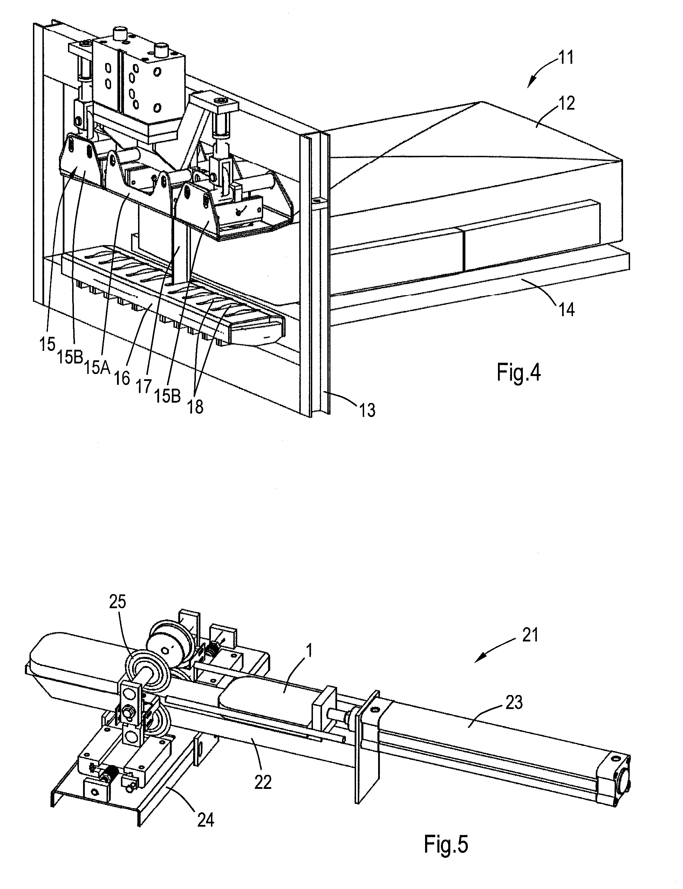

Figure 4 is a perspective view of a first apparatus 11 according to the present invention for cutting a block of cheese 12 into two subblocks and making pre-cuts through the rind. The apparatus 11 comprises a frame 13, a conveyor or table 14 for supplying a block of cheese 12, and lower and upper supports 15, 16 for cutting elements. A knife 17 having a length in excess of the height of the block 12 extends between the lower and upper supports 15, 16 and is located in the middle of the frame 13. Each of the supports 15, 16 comprises a plurality of rotatable cutting wheels 18 located on either side of the knife 17 at regular intervals. In this example, the upper support 15 comprises a central section 15A that is slidable in the vertical direction and two side sections 15B rotatably mounted on the central section 15A, thus enabling the upper support 15 and the upper cutting wheels 18 to follow the shape of the block of cheese 12, in particular to follow bulging in the machine direction and cross-machine direction. By feeding a rectangular block of cheese through this first apparatus, the block is cut into two subblocks and a plurality pre-cuts is made through the rind.

Figure 5 is a perspective view of a second apparatus 21 according to the present invention for making pre-cuts in a piece of cheese 1 along the rind. The apparatus 21 comprises a conveyor or table 22, a means, e.g. a pneumatic cylinder 23, for transporting the piece of cheese 1 over the table 22, and a support 24 for cutting elements on either side of the table 22. Each of the supports 24 comprises a set of rotatable cutting wheels 25, one located above the other and separated by a preselected distance (H2). In this example, the supports are slidable in lateral direction, thus enabling the supports and the cutting wheels to follow the shape of the block of cheese, in particular bulging in the cross-machine direction. By feeding a piece of cheese through this second apparatus, pre-cuts are made in the cheese parallel to the rind and leaving bridges having a height H2 connecting the rind to the cheese.

In a further example, not shown in the drawings, the piece of cheese is a wedge cut from a wheel. If the heart of the wheel is removed before cutting the wheel into wedges, the exposed portion is flat or slightly concave. In many cases, the wheel is cut into wedges directly and the slices will initially be cut from the tip of the wedge.

First pre-cuts extend into the cheese and along the rind from both broad and inclined sides of the piece and to a depth that increases towards the back of the cheese, yet leaving bridges connecting the rind to the cheese. The height of the bridges can be constant along the length of the cheese or, e.g. slight increase towards to the back to take account of the increased height of the rind in that direction.

Second pre-cuts extends through the rind and parallel to the back of the piece and into the cheese up to or slightly beyond the first pre-cuts thus dividing the rind in sections. In this example, the length of the sections increases towards the back to take account of the increased height and hence the increased size of the portions in that direction.

The invention is not restricted to the above-described embodiments which can be varied in a number of ways within the scope of the claims. For instance, the rind can be cut from the back during the cutting of the blocks. Alternatives for cutting wheels include, but are not limited to, knives, lasers, and ultrasonic knives.

## Claims

1. Piece of cheese (1) cut from a block, such as a wheel, brick, or ball, and having a rind (6) and at least one exposed portion (4) for cutting e.g. slices from, **characterized by** pre-cuts (7) extending into the cheese and along the rind (6) to facilitate removing by hand sections (10) of the rind (6) adjoining the exposed portion (4).

2. Piece of cheese (1) according to claim 1,
wherein the pre-cuts (7) or the centre lines of the pre-cuts (7) extend parallel to the rind (6).

3. Piece of cheese (1) according to claim 1 or 2, wherein the rind (6) is partly connected to the cheese by bridges of cheese (8).

4. Piece of cheese (1) according to any one of the preceding claims, wherein the pre-cuts (7) extend from opposite sides (3) of the piece (1).

5. Piece of cheese (1) according to the preamble of claim 1 or any one of the preceding claims or block, such as a wheel, brick, or ball, having a rind (6), **characterized by** pre-cuts (9) extending through the rind (6) and dividing the rind (6) in sections (10).

6. Piece of cheese (1) according to claim 5,
wherein the pre-cuts (9) through the rind (6) extend up to or beyond the pre-cuts (7) extending into the cheese and along the rind (6).

7. Piece of cheese (1) according to any one of the preceding claims, in the form of a parallelepiped or wedge and wherein the rind (6) extends at least over two opposite sides (2) of the piece (1).

8. Piece of cheese (1) according to any one of claims 5-7, wherein the pre-cuts (9) through the rind (6) extend substantially parallel to the exposed portion (4).

9. Package, in particular a sealed package, containing a piece of cheese (1) according to any one of the preceding claims.

10. Method of preparing a piece of cheese (1), comprising cutting a block of cheese into pieces (1) having a rind (6) and at least one exposed portion (4) for cutting e.g. slices from, and **characterized by** making pre-cuts (7) into the cheese and along the rind (6) to facilitate removing by hand sections of the rind (6) adjoining the exposed portion (4).

11. Method according to claim 10, wherein the pre-cuts (7) or the centre lines of the pre-cuts (7) are made parallel to the rind (6).

12. Method according to claim 10 or 11, wherein the pre-cuts (7) are made from opposite sides (3) of the piece (1).

13. Method according to the preamble of claim 10 or any one of the claims 10-12 or method of preparing a block, such as a wheel, brick, or ball, having a rind, **characterized by** making pre-cuts (9) through the rind (6).

14. Method according to claim 13, wherein the pre-cuts (9) through the rind (6) are made during cutting the block of cheese into pieces (1).

15. Method according to claim 13 or 14, wherein the pre-cuts (9) through the rind (6) are made to extend up to or beyond the pre-cuts (7) extending into the cheese and along the rind (6).

16. Apparatus (11) for cutting a block of cheese (12) into subblocks, comprising a frame (13), a supply (14) for blocks of cheese (12), and at least one knife (17) having a length in excess of the height of the blocks (12), **characterized by** lower and upper supports (15, 16) comprising a plurality of cutting elements (18) located on either side of the knife (17) for making pre-cuts (9) through the rind (6).

17. Apparatus (12) for preparing a piece of cheese (1), comprising a supply (22) for pieces of cheese and **characterized by** at least one cutting element (25) on at least one side of the supply (22) for making pre-cuts (7) into the cheese and along the rind (6) to facilitate removing by hand sections of the rind (6).
